# EUROPÄISCHE PATENTANMELDUNG

(11) **EP 2 853 161 A1**
(43) Veröffentlichungstag der Anmeldung: **01.04.2015**
(21) Anmeldenummer: 14186846.3
(22) Anmeldetag: 29.09.2014
(51) Int. Cl.: A21B 3/13, A21D 8/02, A21D 13/00

(54) **Backware mit einer rinnenförmigen Vertiefung und einer darin enthaltenen Füllung sowie Verfahren zu deren Herstellung**

(30) Priorität: 27.09.2013 DE 102013219617
(71) Anmelder: Ostermair, Michael F. J., 82178 Puchheim (DE)
(72) Erfinder: Ostermair, Michael F. J., 82178 Puchheim (DE)
(74) Vertreter: Grünecker, Kinkeldey, Stockmair & Schwanhäusser

(57) **Zusammenfassung**

Die Erfindung betrifft eine Backware mit einer rinnenförmigen Vertiefung und einer darin enthaltenen Füllung sowie ein Verfahren zu deren Herstellung. Um bei einer Backware aus einem Gärteig, insbesondere aus einem Brotteig, mit einer rinnenförmigen Vertiefung und einer darin enthaltenen Füllung die Handhabung und den Verzehr noch nutzerfreundlicher zu gestalten, ist erfindungsgemäß vorgesehen, dass eine teigige Füllung in einem formfixierten Zustand der Backware in die Vertiefung eingefüllt und anschließend zumindest teilweise verfestigt ist.

## Beschreibung

Die Erfindung betrifft eine Backware mit einer rinnenförmigen Vertiefung und einer darin enthaltenen Füllung sowie ein Verfahren zu deren Herstellung.

Eine solche Backware ist beispielsweise aus der DE 20 2012 006 088 bekannt.

Um bei einer Backware aus einem Gärteig, insbesondere aus einem Brotteig, mit einer rinnenförmigen Vertiefung und einer darin enthaltenen Füllung die Handhabung und den Verzehr noch nutzerfreundlicher zu gestalten, ist erfindungsgemäß vorgesehen, dass eine teigige Füllung in einem formfixierten Zustand der Backware in die Vertiefung eingefüllt und anschließend zumindest teilweise verfestigt ist. Der Begriff teigig bezieht sich auf den Ausgangszustand der Füllung. Durch nachträgliches Verfestigen ändert sich die Konsistenz der Füllung zunehmend von teigig zu fest. Die rinnenförmige Vertiefung hält die ursprünglich teigige Füllung in Form, bis zumindest teilweise eine Verfestigung der Füllung erreicht wurde. Im Ergebnis sind sowohl die Backware als auch die Füllung formfixiert, so dass sie bei der Verpackung, bei einem späteren Backvorgang und schließlich bei einem Verzehr leichter handhabbar sind. Dadurch wird schließlich das Genusserlebnis beim Verbraucher erhöht.

In einer vorteilhaften Weiterbildung der Erfindung ist die Füllung durch Erhitzen, vorzugsweise Backen, oder Abkühlen, vorzugsweise Tiefkühlen, verfestigt. In der Regel wird die Backware durch das Backen auch verzehrfertig zubereitet.

Es kann von Vorteil sein, wenn die Füllung eine Fleischbrät- und/oder Käsefüllung ist, vorzugsweise eine Füllung aus Leberkäsebrät. Eine Leberkäsesemmel gehört zu den bekannten bayerischen Speisen. Dabei wird eine Scheibe aus Leberkäse, außerhalb Bayerns auch als Fleischkäse bezeichnet, in eine aufgeschnittene Semmel eingelegt und wahlweise mit Senf verfeinert. Der Leberkäse wird aus einer teigigen Masse - dem Leberkäsebrät - eigens in einer Backform gebacken und anschließend in einem durch das Backen verfestigten und formfixierten Zustand zerteilt. Die Semmel wird unabhängig davon hergestellt. Für den einzelnen Verbraucher ist das Herstellen oder Zubereiten einer einzelnen Leberkäsesemmel umständlich und in der Regel unwirtschaftlich. Daher handelt es sich um eine typische Speise für einen Stehimbiss, wo in der Regel mehrere Einheiten in kurzer zeitlicher Abfolge verkauft werden. Gerade im Falle einer Leberkäsesemmel zeigt die Erfindung wesentliche Vorteile. Das Leberkäsebrät kann als teigige Füllung in der rinnenförmigen Vertiefung der Backware gehalten und nachträglich gemeinsam mit dem Backwerk gebacken und verzehrfertig zubereitet werden. Während das Leberkäsebrät im teigigen und damit formveränderlichen Zustand von der durch die Backware gebildeten Backform gehalten wird, wächst das Leberkäsebrät beim Backvorgang förmlich mit der Backware zu einer formschönen und vor allem verzehrfreundlichen Einheit zusammen. Im Gegensatz zu einer klassischen Leberkäsesemmel können sich Leberkäse und Brotteig bei der erfindungsgemäßen Backware nicht oder nur schwer trennen.

Es kann von Vorteil sein, wenn die Füllung mit der Backware vorzugsweise formschlüssig verbunden ist. Dies kann beispielsweise dadurch erreicht werden, dass die rinnenförmige Vertiefung leicht hinterschnittig ausgebildet ist oder einzelne Vorsprünge aufweist, die in die verfestigte Füllung hervorstehen. Im teigigen und fließfähigen Zustand kann die Füllung die Hinterschneidung oder den Vorsprung umfließen und wird bei der nachfolgenden Verfestigung an diesen Elementen festgehalten. Dadurch kann die Backware mit der Füllung zu einer verzehrfreundlichen Einheit verbunden werden.

Ein weiterer Aspekt der Erfindung betrifft ein Verfahren zur Herstellung einer Backware aus einem Gärteig, insbesondere aus einem Brotteig, mit einer rinnenförmigen Vertiefung und einer darin enthaltenen Füllung, vorzugsweise ein Verfahren zur Herstellung der Backware nach wenigstens einer der vorangehenden Ausführungen, gekennzeichnet durch die Schritte:
- Fixieren der Form eines Backteigs der Backware und/oder der Form der rinnenförmigen Vertiefung;
- Einbringen einer teigigen Füllung in die Vertiefung; und
- Verfestigen zumindest eines Teils der Füllung.

Es kann sich als hilfreich erweisen, wenn die Form der Backware und/oder der rinnenförmigen Vertiefung vorzugsweise vor dem Einbringen der Füllung durch Garen oder Anbacken des Backteigs fixiert wird. Durch das Anbacken wird die Backware zunächst oberflächlich verfestigt und zumindest ansatzweise eine Kruste ausgebildet. Diese Kruste ist für die Füllung insbesondere beim Backvorgang schwer zu durchdringen, so dass die Backware nicht durchweicht. Ferner bildet die Kruste eine vorzugsweise geschlossene Backform, in der die fließfähige Füllung bis zur Verfestigung sicher aufbewahrt werden kann.

Es kann aber auch von Vorteil sein, wenn die Füllung durch Tiefkühlen oder Backen zumindest teilweise verfestigt wird. Das Tiefkühlen dient vorwiegend der Haltbarmachung des Produkts, hat aber auch den Vorteil, dass das Produkt beim Transport vom Herstellungsort zum Verbraucher besonders formstabil ist. So können die Formen der Backware und der Füllung durch die Tiefkühlung zumindest für den Transport zum Verbraucher gesichert werden. Beim Verbraucher kann die Füllung dann durch den nachgelagerten Backvorgang endgültig verfestigt werden, so dass insbesondere auch beim Verzehr die Formbeständigkeit der Backware und der Füllung gewährleistet sind.

Um die Haltbarkeit der Backware zu erhöhen, kann es sinnvoll sein, die Backware vorzugsweise in einem formfixierten und/oder mit der Füllung beaufschlagten Zustand z.B. luftdicht zu verpacken.

Die Haltbarkeit der Backware kann durch Tiefkühlen der Backware, vorzugsweise in einem formfixierten und/oder mit der Füllung beaufschlagten Zustand, zusätzlich erhöht werden.

Die geringste Keimbelastung und somit die längste Haltbarkeit kann erreicht werden, indem die Backware erst unmittelbar vor dem Backvorgang aus einer vorzugsweise luftdichten Verpackung entnommen wird.

Eine vorteilhafte Weiterbildung der Erfindung umfasst das Backen der Backware, vorzugsweise aus einem Tiefkühlzustand, in einem formfixierten und/oder mit der Füllung beaufschlagten Zustand, vorzugsweise für 20 bis 25 Minuten, bevorzugt in einem Temperaturbereich von 170 bis 180°C, wobei die Backzeit der Backware und die Backzeit der Füllung vorzugsweise aufeinander abgestimmt sind. Am Ende des Backvorgangs ist das Produkt verzehrfertig.

Zur Herstellung der erfindungsgemäßen Backware und/oder zur Durchführung des erfindungsgemäßen Verfahrens wird vorzugsweise eine Backvorrichtung eingesetzt, die wenigstens eine rinnenförmige Aufnahme für einen Teigrohling und wenigstens einen Stempel aufweist, wobei die Backvorrichtung zwischen einer Öffnungsstellung zum Einbringen des Teigrohlings in die Aufnahme sowie zur Entnahme der Backware aus der Backvorrichtung, und einer Arbeitsstellung, in welcher der Stempel und die Aufnahme einen Formhohlraum für die Backware bilden, überführbar ist. Durch die Backvorrichtung wird wenigstens eine rinnenförmige Vertiefung an der Außenseite der Backware gebildet, so dass diese mit einer Füllung versehen werden kann, ohne die Backware zuvor aufzuschneiden. Durch die Rinnenform wird die Füllung beim Handverzehr in der Vertiefung gehalten. Dadurch, dass die rinnenförmige Vertiefung an der Außenseite der Backware gebildet wird, die durch die Formgebung in der Backvorrichtung sowie durch den nachfolgenden Backprozess gefestigt ist, wird ein Aufweichen der Backware durch die Füllung zumindest verzögert oder sogar gänzlich verhindert.

Es kann sich als hilfreich erweisen, wenn die Aufnahme und der Stempel komplementäre Geometrien aufweisen. Dadurch kann die Backware optimal geformt werden und während des Gärvorgangs ideal in den durch die Backvorrichtung gebildeten Formhohlraum hineinwachsen. Der Begriff "komplementäre Geometrien" ist so zu verstehen, dass die Außenkontur des Stempels der Innenkontur der Aufnahme im Wesentlichen folgt. Dadurch kann die Dicke der Backware sehr genau bestimmt werden und die ideale Backzeit mit hoher Genauigkeit eingestellt werden. Durch die komplementären Geometrien kann die Backware durch die Backvorrichtung nach der Art einer Prägevorrichtung geprägt werden. Beispielsweise ist eine Arbeitsfläche des Stempels konvex ausgebildet und eine korrespondierende Arbeitsfläche der Aufnahme konkav ausgebildet.

Es kann von Vorteil sein, wenn die Aufnahme und der Stempel derart zusammenwirken, dass die rinnenförmige Vertiefung der Backware entlang der rinnenförmigen Aufnahme ausgebildet wird und/oder die rinnenförmige Vertiefung wenigstens einseitig, vorzugsweise beidseitig, abgesetzt wird. Dadurch kann eine besonders formschöne und funktionale Backware geschaffen werden. Vorzugsweise erstreckt sich die Vertiefung exakt entlang der Längsachse der Backware. Bevorzugt ist lediglich ein Ende der Vertiefung abgesetzt bzw. geschlossen und das andere Ende geöffnet, wobei das geöffnete Ende die Essseite der Backware vorgibt. Üblicherweise wird das Essende der Backware beim Handverzehr gegenüber dem Halteende leicht angehoben, so dass die Füllung unter dem Einfluss der Gewichtskraft ggf. zum Halteende verlagert wird. Vorzugsweise ist das dem geöffneten Ende gegenüber liegende Ende der Vertiefung abgesetzt, so dass ein Austreten der Füllung beim Handverzehr verhindert werden kann.

Es kann sich als hilfreich erweisen, wenn der Formhohlraum wenigstens einen vorzugsweise U-förmigen Spalt aufweist, in den der Teigrohling beim Gärprozess wachsen bzw. steigen kann, wobei der in den Spalt wachsende bzw. steigende Teig vorzugsweise wenigstens einen Rand der rinnenförmigen Vertiefung bildet. Durch die Teigmenge und ggf. die Dauer des Gärprozesses kann die Form und Höhe des Randes, und damit indirekt das Volumen der Vertiefung bestimmt werden.

Es kann von Vorteil sein, wenn die Backvorrichtung eine Verriegelungseinrichtung aufweist, um den Stempel gegenüber der Aufnahme in der Öffnungsstellung und/oder in der Arbeitsstellung der Backvorrichtung zu verriegeln. Dadurch kann bspw. verhindert werden, dass der bei der Gärung in der Aufnahme steigende Teig den Stempel nach oben drückt. Ferner kann der Stempel in der Öffnungsstellung gesichert werden, um das Be- und Entladen der Aufnahme nicht zu beeinträchtigen. Besonders vorteilhaft ist eine Ausführung, bei der die Backvorrichtung eine Verriegelungseinrichtung aufweist, um eine Vielzahl von Stempeln gleichzeitig gegenüber einer Vielzahl von Aufnahmen in der Öffnungsstellung und/oder in der Arbeitsstellung der Backvorrichtung zu verriegeln. Vorzugsweise umfasst die Backvorrichtung eine aufnahmeseitige Haltevorrichtung und eine stempelseitige Haltevorrichtung, wobei die aufnahmeseitige Haltevorrichtung mit einer Vielzahl von Aufnahmen verbunden ist und die stempelseitige Haltevorrichtung mit einer Vielzahl von Stempeln verbunden ist, wobei die Verriegelungseinrichtung derart ausgebildet ist, um die aufnahmeseitige Haltevorrichtung und die stempelseitige Haltevorrichtung in der Öffnungsstellung und/oder in der Arbeitsstellung der Backvorrichtung gegeneinander zu verriegeln.

Es kann aber auch vorteilhaft sein, wenn die Aufnahme der Backvorrichtung wenigstens eine der folgenden Anforderungen erfüllt:
- Die Aufnahme befindet sich in/an einer unteren Form der Backvorrichtung.
- Die Aufnahme umfasst eine Beschichtung, vorzugsweise eine Antihaftbeschichtung.
- Die Aufnahme umfasst im Wesentlichen ein spiegelsymmetrisches Querschnittsprofil, vorzugsweise ein U-förmiges oder w-förmiges Querschnittsprofil.
- Die Aufnahme ist als Matrize ausgebildet.
- Die Aufnahme umfasst wenigstens zwei Arbeitsflächen, die sich zwischen dem Boden und der Mündung der Aufnahme erstrecken und vorzugsweise im Bereich einer Längsmittelachse der Aufnahme treffen, wobei die Arbeitsflächen bevorzugt einander zugewandt sind und zumindest in der Arbeitsstellung der Backvorrichtung in Richtung des Stempels weisen, wobei die Arbeitsflächen vorzugsweise zur Mündung der Aufnahme hin eine abnehmende Krümmung aufweisen und/oder im Wesentlichen parabelförmig ausgebildet sind.
- Die Aufnahme umfasst wenigstens einen Vorsprung, der vorzugsweise in Richtung der Mündung der Aufnahme hervorsteht, wobei sich der Vorsprung bevorzugt entlang oder parallel zur Längsachse der Aufnahme, bevorzugt über die gesamte Länge der Aufnahme, erstreckt, wobei die Höhe des Vorsprungs vorzugsweise im Bereich von 2 bis 20%, bevorzugt im Bereich von 5 bis 10% der maximalen Höhe der Aufnahme liegt, wobei sich der Vorsprung bevorzugt gratförmig vom Boden der Aufnahme erhebt.
- Die Aufnahme erstreckt sich im Wesentlichen entlang einer geraden oder gekrümmten Linie.
- Die Aufnahme weist eine Länge im Bereich von 5 bis 50 cm, vorzugsweise eine Länge im Bereich von 15 bis 40 cm, bevorzugt eine Länge im Bereich von 25 bis 35 cm auf.
- Die Aufnahme weist eine maximale Breite im Bereich von 2 bis 10 cm, vorzugsweise eine maximale Breite im Bereich von 4 bis 8 cm, bevorzugt eine maximale Breite im Bereich von 5 bis 7 cm auf.
- Die Aufnahme weist eine maximale Höhe im Bereich von 1 bis 10 cm, vorzugsweise eine maximale Höhe im Bereich von 2 bis 8 cm, bevorzugt eine maximale Höhe im Bereich von 3 bis 5 cm auf.
- Das Querschnittsprofil der Aufnahme ist über wenigstens 50%, vorzugsweise über wenigstens 60%, bevorzugt über wenigstens 75% der Länge, besonders bevorzugt über die gesamte Länge der Aufnahme konstant.
- Die Breite der Aufnahme nimmt vom Boden bis zur Mündung der Aufnahme zu.
- Die Aufnahme ist gegenüber dem Stempel bewegbar.
- Die Aufnahme ist aus Metall, vorzugsweise aus Aluminium, ausgebildet.
- Die Längsachse der Aufnahme ist zumindest in der Arbeitsstellung der Backvorrichtung im Wesentlichen in einer horizontalen Ebene ausgerichtet.
- Eine Vielzahl von Aufnahmen ist vorzugsweise parallel nebeneinander und/oder hintereinander in einer unteren Form der Backvorrichtung ausgebildet.

Es kann ebenso von Vorteil sein, wenn der Stempel wenigstens eine der folgenden Anforderungen erfüllt:
- Der Stempel befindet sich in/an einer oberen Form der Backvorrichtung.
- Der Stempel umfasst eine Beschichtung, vorzugsweise eine Antihaftbeschichtung.
- Der Stempel umfasst im Wesentlichen ein keilförmiges, vorzugsweise ein D-förmiges oder Δ-förmiges Querschnittsprofil, bevorzugt ein spiegelsymmetrisches Querschnittsprofil.
- Der Stempel ist als länglicher Profilstab ausgebildet.
- Der Stempel ist als Patrize ausgebildet.
- Der Stempel umfasst eine Basis, die zumindest in der Arbeitsstellung der Backvorrichtung von der Aufnahme abgewandt ist, und einen Scheitel, der zumindest in der Arbeitsstellung der Backvorrichtung der Aufnahme zugewandt ist, wobei sich die Breite des Stempels vorzugsweise von der Basis bis zum Scheitel verringert.
- Der Stempel umfasst wenigstens zwei Arbeitsflächen, die sich zwischen der Basis und dem Scheitel erstrecken und vorzugsweise und im Bereich des Scheitels treffen, wobei die Arbeitsflächen bevorzugt voneinander abgewandt sind und zumindest in der Arbeitsstellung der Backvorrichtung den Arbeitsflächen der Aufnahme zugewandt sind und/oder frontal gegenüberstehen, wobei die Arbeitsflächen vorzugsweise erste Abschnitte aufweisen, die bevorzugt angrenzend an die Basis angeordnet sind und sich im Wesentlichen in parallelen Ebenen erstrecken, wobei die Arbeitsflächen vorzugsweise zweite Abschnitte aufweisen, die vorzugsweise zwischen der Basis und dem Scheitel angeordnet sind und zum Scheitel hin eine zunehmende Krümmung aufweisen, wobei die Arbeitsflächen vorzugsweise dritte Abschnitte aufweisen, die im Bereich des Scheitels bündig ineinander übergehen.
- Der Stempel erstreckt sich zumindest in der Arbeitsstellung der Backvorrichtung parallel zur Längsachse der Aufnahme.
- Der Stempel weist eine Länge im Bereich von 5 bis 35 cm, vorzugsweise im Bereich von 10 bis 30 cm, bevorzugt im Bereich von 15 bis 25 cm auf.
- Der Stempel weist eine maximale Breite im Bereich von 1 bis 8 cm, vorzugsweise im Bereich von 1,5 bis 4 cm, bevorzugt im Bereich von 2 bis 3 cm auf.
- Der Stempel weist eine maximale Höhe im Bereich von 1 bis 8 cm, vorzugsweise im Bereich von 2 bis 5 cm, bevorzugt im Bereich von 2,5 bis 3,5 cm auf.
- Der Stempel erstreckt sich zumindest in der Arbeitsstellung der Backvorrichtung über wenigstens 50%, vorzugsweise über wenigstens 60%, bevorzugt über wenigstens 75% der Länge der Aufnahme und/oder über weniger als 100%, vorzugsweise über weniger als 95%, bevorzugt über weniger als 90% der Länge der Aufnahme.
- Der Stempel erstreckt sich zumindest in der Arbeitsstellung der Backvorrichtung über wenigstens 50%, vorzugsweise über wenigstens 60%, bevorzugt über wenigstens 75% der maximalen Breite und/oder der maximalen Höhe der Aufnahme.
- Das Querschnittsprofil des Stempels ist über wenigstens 50%, vorzugsweise über wenigstens 60%, bevorzugt über wenigstens 75% der Länge, besonders bevorzugt über die gesamte Länge des Stempels konstant.
- Der Stempel ist gegenüber der Aufnahme bewegbar.
- Der Stempel ist aus Metall, vorzugsweise aus Aluminium, ausgebildet.
- Die Längsachse des Stempels ist zumindest in der Arbeitsstellung der Backvorrichtung im Wesentlichen in einer horizontalen Ebene ausgerichtet.
- Eine Vielzahl von Stempeln ist vorzugsweise parallel nebeneinander und/oder hintereinander in einer oberen Form der Backvorrichtung ausgebildet.

Die genannten Merkmale erweisen sich vor allem unter fertigungstechnischen Aspekten als besonders hilfreich.

Ein Verfahren zur Formfixierung der Backware unter Verwendung der Backvorrichtung nach wenigstens einer der vorangehenden Ausführungen kann folgende Schritte umfassen:
- Bereitstellen der Backvorrichtung in der Öffnungsstellung,
- Anordnen eines vorzugsweise länglichen Teigrohlings in der Aufnahme der Backvorrichtung,
- Überführen der Backvorrichtung aus der Öffnungsstellung in die Arbeitsstellung, so dass der Teigrohling in der Aufnahme verteilt wird und/oder die wenigstens eine rinnenförmige Vertiefung im Teigrohling ausgebildet wird,
- Gären und ggf. Backen, insbesondere Vorbacken und/oder Tiefkühlen und/oder Fertigbacken des Teigrohlings in der Arbeitsstellung der Backvorrichtung,
- Überführen der Backvorrichtung aus der Arbeitsstellung in die Öffnungsstellung, und
- Entnahme der Backware aus der Backvorrichtung.

Erfindungsgemäß wird die Füllung nachträglich in die Vertiefung der formfixierten Backware eingebracht.

Es kann sich zudem als hilfreich erweisen, wenn die Backware wenigstens eine der folgenden Anforderungen erfüllt:
- Die Backware umfasst einen Kern aus porösem Teig und eine vollständig um den Kern geschlossene Kruste.
- Die Vertiefung wird durch die Kruste der Backware definiert.
- Die Backware, insbesondere die Kruste der Backware, bildet einen Rand um die Vertiefung, wobei der Rand vorzugsweise zusammenhängend und/oder U-förmig ausgebildet ist.
- Die Vertiefung ist an wenigstens einem Ende geöffnet und/oder an wenigstens einem Ende, vorzugsweise an beiden Enden, geschlossen.
- Die Backware umfasst wenigstens eine Nut an einer von der Vertiefung abweisenden Seite der Backware, wobei sich die Nut vorzugsweise parallel zur Vertiefung bevorzugt über die gesamte Länge der Backware erstreckt.
- Die Nut wird durch die Kruste der Backware definiert.
- Die Vertiefung befindet sich an der Oberseite der Backware und/oder die Nut an der Unterseite der Backware.
- Die Backware weist einen im Wesentlichen halbzylindrischen und/oder rinnenförmigen Umriss auf.
- Die Backware weist im Wesentlichen ein U-förmiges, V-förmiges oder W-förmiges Querschnittsprofil auf.
- Die Backware ist stabil, vorzugsweise kippfrei und/oder rollfrei, auf einer ebenen Unterlage absetzbar, so dass die Füllung ohne auszutreten in der Vertiefung gehalten wird.
- Die Backware umfasst wenigstens zwei voneinander beabstandete Aufstandflächen zum Aufstellen der Backware auf eine ebene Unterlage, wobei die Nut und/oder die Vertiefung vorzugsweise zwischen den Aufstandflächen angeordnet ist.
- Die Backware ist für den Handverzehr bestimmt und dimensioniert.

Durch die genannten Merkmale kann eine besonders vorteilhafte Ausgestaltung der Backware erreicht werden. Insbesondere günstig ist die Ausführung, bei der die Backware wenigstens zwei voneinander beabstandete Aufstandflächen zum Absetzen der Backware auf einer ebenen Unterlage umfasst. Die Aufstandflächen sind vorzugsweise so angeordnet, dass der Schwerpunkt der Backware mit Füllung zwischen den Aufstandflächen liegt bzw. der Vektor der Gewichtskraft zwischen den Aufstandflächen hindurch läuft. Dadurch wird die gefüllte Backware stabil im Gleichgewichtszustand gehalten. Da die Menge und das Gewicht der Füllung in vielen Fällen variieren, ist es vorteilhaft, wenn die Backware symmetrisch ausgebildet ist und/oder die Vertiefung in Projektion auf die ebene Unterlage zwischen den Aufstandflächen angeordnet ist. So kann in der Regel ein Kippen oder Rollen der gefüllten Backware verhindert werden.

Vorteilhafte Weiterbildungen der Erfindung ergeben sich aus der Kombination der Merkmale der Ansprüche mit den Merkmalen aus der Beschreibung und aus den Zeichnungen.

### Kurze Beschreibung der Figuren

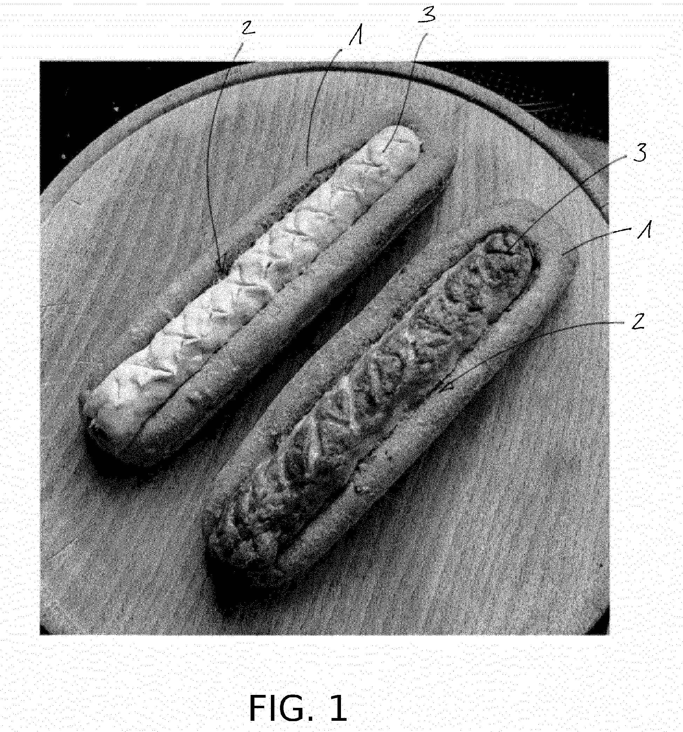

- Fig. 1: zeigt erfindungsgemäße Backwaren 1 aus einem Brotteig mit einer rinnenförmigen Vertiefung und einer Leberkäsefüllung 3, wobei die Backware 1 links oben im Bild durch Anbacken formfixiert ist und die Vertiefung 2 das teigige und rohe Leberkäsebrät aufnimmt, während die Backware 1 rechts unten im Bild fertig gebacken ist und die Füllung 3 durch den Backvorgang zumindest außenseitig teilweise verfestigt ist.

### Detaillierte Beschreibung des bevorzugten Ausführungsbeispiels

Das bevorzugte Ausführungsbeispiel der Erfindung betrifft eine Backware aus einem Gärteig, insbesondere aus einem Brotteig, mit einer rinnenförmigen Vertiefung und einer Leberkäsefüllung. Die Backware ist durch Anbacken formfixiert. In diesem Zustand wird das teigige und rohe Leberkäsebrät in die Vertiefung 2 eingefüllt. Anschließend wird das Leberkäsebrät mit der Backware gebacken und dadurch zumindest teilweise verfestigt.

Das Verfahren zur Herstellung dieser Backware lässt sich in Kürze wie folgt beschreiben:

Zunächst wird ein Teigling der Backware in die Backform eingegeben und angebacken, um die Form der Backware und der rinnenförmigen Vertiefung zu fixieren. Die Länge der Backzeit ist so zu wählen, dass die Form der Backware beibehalten bleibt. Die Backware kann dabei z. B. halbgebacken oder zu 2/3 gebacken werden. Es wird aber vorzugsweise nicht durchgebacken, um später die Backzeit des Teiglings und der Füllung anzugleichen.

Anschließend wird das rohe und teigige Leberkäsebrät als Füllung in die rinnenförmige Vertiefung eingegeben. Die rinnenförmige Vertiefung hält das Leberkäsebrät in Form. Das Anbacken des Teiglings bewirkt an der Backware oberflächlich eine Verfestigung oder Krustenbildung, die ein Eindringen des Leberkäsebräts und damit ein Auf- und Durchweichen des Teigs während des späteren Backvorgangs verhindert. Natürlich können anstelle des Leberkäsebräts sämtliche Sorten an Fleischbrät- und/oder Käsefüllungen verwendet werden.

In diesem Zustand, der in Fig. 1 links oben dargestellt ist, wird das Produkt verpackt und eingefroren.

Um das Produkt verzehrfertig zuzubereiten wird es tiefgekühlt in den Backofen gegeben und bei 170-180° für 20 - 25 Min gebacken. Die Form und Menge des Leberkäses und des Brotteigs sind so aufeinander abgestimmt, dass beides die "gleiche" Backzeit hat. Bei diesen Bedingungen erhält der Leberkäse eine schöne Färbung und wird durchgebacken. Das Brot ist außen knusprig und innen saftig. Aufgrund der Kombination mit dem Leberkäse wird der Brotteig beim Backen geschützt und trocknet nicht aus. Dabei dient der Saft des Leberkäses dem Brotteig als Schutz vor dem Austrocknen, wobei durch das Brät aber auch weniger Hitze an den die Vertiefung bildenden Teil des Brotteigs kommt. Die durch Anbacken fixierte Form des Brotteigs dient gleichsam als Backform für den Leberkäse. Eine fertig gebackene Backware ist in Fig. 1 rechts unten dargestellt.

Es ist allerdings auch möglich, dass das Produkt bereits werksseitig durchgebacken wird, bevor es in den Verkauf gelangt. Ein Verbraucher kann das Produkt dann selbst auf eine beliebige Temperatur erwärmen und verzehrfertig zubereiten.

## Patentansprüche

1. Backware (1) aus einem Gärteig, insbesondere aus einem Brotteig, mit einer rinnenförmigen Vertiefung (2) und einer darin enthaltenen Füllung (3), wobei eine teigige Füllung (3) in einem formfixierten Zustand der Backware (1) in die Vertiefung (2) eingefüllt und anschließend zumindest teilweise verfestigt ist.

2. Backware (1) nach Anspruch 1, **dadurch gekennzeichnet, dass** die Füllung (3) durch Erhitzen, vorzugsweise Backen, oder Abkühlen, vorzugsweise Tiefkühlen, verfestigt ist.

3. Backware (1) nach einem der vorangehenden Ansprüche, **dadurch gekennzeichnet, dass** die Füllung (3) eine Fleischbrät- und/oder Käsefüllung ist, vorzugsweise eine Füllung aus Leberkäsebrät.

4. Backware (1) nach einem der vorangehenden Ansprüche, **dadurch gekennzeichnet, dass** die Füllung (3) mit der Backware (1) vorzugsweise formschlüssig verbunden ist.

5. Verfahren zur Herstellung einer Backware (1) aus einem Gärteig, insbesondere aus einem Brotteig, mit einer rinnenförmigen Vertiefung (2) und einer darin enthaltenen Füllung (3), vorzugsweise Verfahren zur Herstellung der Backware (1) nach wenigstens einem der vorangehenden Ansprüche, **gekennzeichnet durch** die Schritte:
a. Fixieren der Form eines Backteigs der Backware (1) und/oder der Form der rinnenförmigen Vertiefung (2);
b. Einbringen einer teigigen Füllung (3) in die Vertiefung (2); und
c. Verfestigen zumindest eines Teils der Füllung (3).

6. Verfahren nach Anspruch 5, **dadurch gekennzeichnet, dass** die Form der Backware (1) und/oder der rinnenförmigen Vertiefung (2) vorzugsweise vor dem Einbringen der Füllung (2) durch Garen oder Anbacken des Backteigs fixiert wird.

7. Verfahren nach Anspruch 5 oder 6, **dadurch gekennzeichnet, dass** die Füllung (3) durch Tiefkühlen oder Backen zumindest teilweise verfestigt wird.

8. Verfahren nach einem der Ansprüche 5 bis 7, **gekennzeichnet durch** Verpacken der Backware (1), vorzugsweise luftdicht, bevorzugt in einem formfixierten und/oder mit der Füllung (3) beaufschlagten Zustand.

9. Verfahren nach einem der Ansprüche 5 bis 8, **gekennzeichnet durch** Tiefkühlen der Backware (1), vorzugsweise in einem formfixierten und/oder mit der Füllung (3) beaufschlagten Zustand.

10. Verfahren nach einem der Ansprüche 5 bis 9, **gekennzeichnet durch** Backen der Backware (1), vorzugsweise aus einem Tiefkühlzustand, in einem formfixierten und/oder mit der Füllung (3) beaufschlagten Zustand, vorzugsweise für 20 bis 25 Minuten, bevorzugt in einem Temperaturbereich von 170 bis 180°C, wobei die Backzeit der Backware (1) und die Backzeit der Füllung (3) vorzugsweise aufeinander abgestimmt sind.
